# EUROPÄISCHE PATENTSCHRIFT

(11) **EP 1 099 204 B1**
(45) Veröffentlichungstag und Bekanntmachung des Hinweises auf die Patenterteilung: **20.11.2002**
(21) Anmeldenummer: 99947208.7
(22) Anmeldetag: 16.07.1999
(51) Int. Cl.: G08G 1/017

(54) **PASSIVES ZUGANGSSYSTEM FÜR FAHRZEUGE**
ACCESS SYSTEM FOR VEHICLES
SYSTEME D'ACCES POUR VEHICULES

(30) Priorität: 20.07.1998 AU PP475298; 08.06.1999 AU 3393399
(43) Veröffentlichungstag der Anmeldung: 16.05.2001
(73) Patentinhaber: ROBERT BOSCH GMBH, 70442 Stuttgart (DE)
(72) Erfinder: PAVATICH, Gianfranco, Keilor Downs, VIC 3038 (AU); CROWHURST, Peter, Rowville, VIC 3178 (AU)
(86) Internationale Anmeldenummer: DE9902178
(87) Internationale Veröffentlichungsnummer: WO00005696

(56) Entgegenhaltungen:
- WO-A-96/07168
- GB-A- 2 259 227
- US-A- 4 209 783
- US-A- 4 263 595

## Beschreibung

Die vorliegende Erfindung bezieht sich auf ein Zugangssystem, insbesondere ein passives Zugangssystem für Fahrzeuge.

Derzeit existierende passive Fahrzeug-Zugangssysteme verwenden fernbetätigte elektronische Schlüssel, die einen Sender einschließen, der Authentifizierungsdaten an einen in dem Fahrzeug befindlichen Empfänger übermittelt, wenn der Schlüssel innerhalb eines vorbestimmten Bereichs des Empfängers ist. Das zwischen dem Sender und dem Empfänger aktivierte Kommunikationsprotokoll benutzt zum Führen der übertragenen Daten eine Radiofrequenz-Schnittstelle. Die Radiofrequenz (RF)-Schnittstelle hat einen begrenzten Bereich, um zu gewährleisten, daß die Kommunikationsverbindung unterbrochen wird, wenn sich eine im Besitz des Schlüssels befindliche Person aus der unmittelbaren Nähe des Fahrzeugs entfernt.

Passive Zugangssysteme sind leicht Angriffen unbefugter Personen ausgesetzt, die eine Verstärkerstation benutzen, welche zwischen das Fahrzeug und den Schlüssel gebracht wird, und welche Radiofrequenz-Verstärker zur Herstellung der Kommunikations-verbindung nutzt, wenn sich der Schlüssel nicht in der unmittelbaren Nähe des Fahrzeugs befindet. Es soll mit der vorliegenden Erfindung ein System vorgestellt werden, welches dieses Problem beseitigt oder welches zumindest eine zweckmäßige Alternative bietet.

Aus der GB-A 2259227 ist ein Identifikationssystem offenbart, welches Sender und Empfänger sowie eine Vielzahl von Transpondern enthält. Der Sender überträgt ein Abfragesignal, welches von den Transpondern empfangen wird. Die Transponder antworten nach einer jeweils für sie charakteristischen Verzögerungszeit. Anhand dieser Verzögerungszeit können die jeweils anwesenden Transponder detektiert werden.

Die vorliegende Erfindung stellt ein Zugangssystem vor, welches einen elektronischen Schlüssel mit einem Sender und einen gesicherten Ort, an welchem sich ein Empfänger befindet, einschließt, wobei der Sender und der Empfänger so ausgelegt sind, daß sie miteinander kommunizieren, um Authentifizierungsdaten auszutauschen, dadurch gekennzeichnet, daß der Sender ein Signal übermittelt, der Empfänger das übermittelte Signal in spektrale Daten umsetzt, und daß das Zugangssystem bei Übertragung der Authentifizierungsdaten Zugang zu dem gesicherten Ort gewährt, wenn die spektralen Daten mit der spektralen Signatur des Senders übereinstimmen.

Vorteilhafterweise kann der Empfänger das Vorhandensein einer Verstärkerstation entdecken, wenn die spektralen Daten die Benutzung einer Übertragungscharakteristik der Verstärkerstation repräsentieren.

Die vorliegende Erfindung stellt auch eine Methode zur Gewährung des Zugangs an einen gesicherten Ort ein, einschließlich:
Empfang eines gesandten Signals;
Umsetzen des gesandten Signals in spektrale Daten; Vergleich der spektralen Daten mit einer spektralen Signatur eines Senders; und Gewährung des Zugangs an den gesicherten Ort bei Empfang von Authentifizierungsdaten, wenn die spektralen Daten mit der spektralen Signatur übereinstimmen.

Eine bevorzugte Realisierung der vorliegenden Erfindung ist anschließend mit Bezug auf die beiliegenden Zeichnungen als Beispiel beschrieben, wobei:

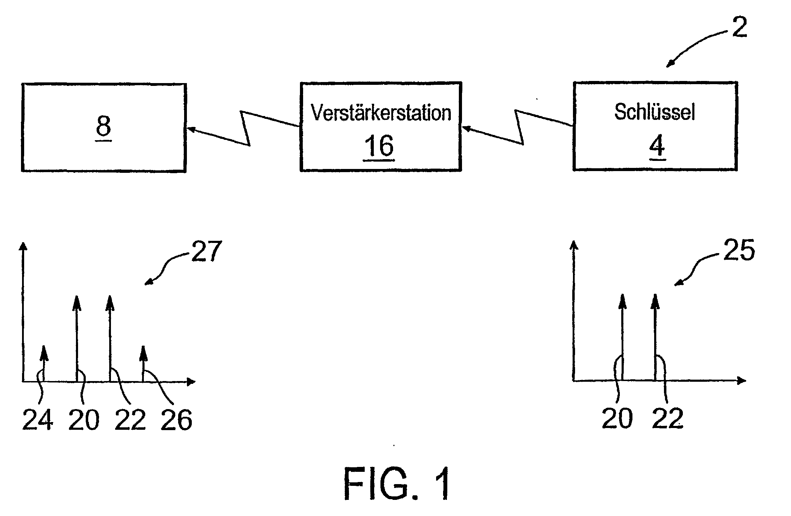

Figur 1 eine schematische Ansicht einer bevorzugten Realisierung eines Zugangssystems ist - wobei 10 eine angreifende Verstärkerstation darstellt - und die gesandten und empfangenen Signale zeigt.
Figur 2 ein schematisches Diagramm der empfangenen Signalstärke gegenüber der Frequenz; und
Figur 3 ein Blockdiagramm des Zugangssystems ist.

Ein passives Zugangssystem 2, wie in den Figuren gezeigt, schließt folgende ein: einen elektronischen Schlüssel 4 mit einem Sender 6 und einer Induktionsspulenantenne 7, eine Basisstation 8 mit einem Empfänger 10 und einer Induktionsspulenantenne 12. Die Basisstation 8 ist an einem gesicherten Ort untergebracht, wie z.B. einem Fahrzeug, und kontrolliert den Zugang zu dem gesicherten Ort. Wenn der Schlüssel innerhalb eines bestimmten Bereichs der Antenne 12 des Empfängers 10 herangeführt wird, erregt der Empfänger 10 den Schlüssel 4, und veranlaßt dadurch den Sender 6, die Übermittlung an den Empfänger 10 zu beginnen. Daten werden unter Verwendung von RF-Signalen übermittelt, welche eine Kommunikationsverbindung zwischen dem Schlüssel 4 und der Basisstation 8 herstellen. Die zwischen dem Schlüssel 4 und der Basisstation 8 übermittelten Daten werden durch ein Kommunikationsprotokoll bestimmt, welches der Schlüssel 4 und die Basisstation 8 befolgen, und welches die Übermittlung von Authentifizierungsdaten von dem Schlüssel 4 an den Empfänger 10 beinhaltet. Zugang zu dem gesicherten Ort wird von der Basisstation 8 nur dann zugelassen, wenn die übermittelten Authentifizierungsdaten mit den von der Basisstation 8 gespeicherten Authentifizierungen übereinstimmen.

Um eine Kommunikationsverbindung zwischen dem Schlüssel 4 und der Basisstation 8 herzustellen, wenn der Schlüssel 4 an einer Stelle außerhalb des vorbestimmten Bereichs der Antenne 12 des Empfängers ist, kann eine Radiofrequenz-Verstärkerstation 16 zwischen den Schlüssel 4 und die Basisstation 8 geführt werden. Um die Kommunikationsverbindung herzustellen, benutzt die Verstärkerstation Verstärker, welche die von dem System 2 übermittelten Signale beträchtlich verstärken müssen, um den Abstand zwischen dem Schlüssel 4 und der Basisstation 8 zu durchbrechen. Die Verstärker von beliebigen Verstärkerstationen 16 mit hohem Verstärkungsgrad haben eine Übertragungscharakteristik, welche idealerweise linear ist, in der Praxis jedoch nie linear ist und zu einem maximalen Verstärkungsgrad ausläuft. Die Verstärkerstation 16 wird daher das von dem Schlüssel 4 übermittelte Signal stören, und die Linearität der Verstärkerstation 16 bestimmt die Höhe des Signal-Störeffekts. Die Linearität des Verstärkers kann mittels einer Messung gemessen werden, die als Zweiton-Messung bekannt ist, um den Auffangpunkt dritter Ordnung (third order intercept point) des Verstärkers zu bestimmen. Der Auffangpunkt dritter Ordnung ist ein theoretischer Punkt, wo Töne dritter Ordnung, die durch ein Mischen der übertragenen Grundtöne erzeugt werden, die Grundtöne auffangen oder stören, in dem Sinne, daß die von dem Verstärker ausgehenden Signale dritter Ordnung dieselbe Amplitude wie die Grundsignale bzw. Signale erster Ordnung haben. Der Auffangpunkt dritter Ordnung (IP3) eines Radiofrequenzverstärkers ist eine Charakteristik, die durch Messung der empfangenen Signalstärke der von dem Empfänger empfangenen Intermodulationstöne dritter Ordnung bestimmt werden kann.

Passive Zugangssysteme übertragen normalerweise Daten unter Verwendung eines einzigen RF-Tons. Um die Anwesenheit einer Verstärkerstation 16 aufgrund der Signalstörung, die diese hervorruft, zu entdecken, überträgt das Zugangssystem 2 der bevorzugten Realisierung zwei Grundfrequenztöne 20 und 22, wie das Senderspektrum 25 zeigt. The zwei RF-Töne 20 und 22 können zur Übermittlung von Daten verwendet werden; jedoch die Genauigkeit der anschließend von dem Empfänger 10 durchgeführten Zwei-Ton-Messung, wie nachfolgend beschrieben, mag eventuell nur ± 5 % betragen. Die Genauigkeit der Messung ist ± 1 %, falls der Schlüssel 4 die Töne 20 und 22 mit einer konstanten Amplitude für die Zwei-Ton-Messung überträgt, und dann anschließend die Authentifizierungsdaten unter Verwendung von RF-Modulation mit einem oder beiden der Töne, die das Trägersignal darstellen, übermittelt.

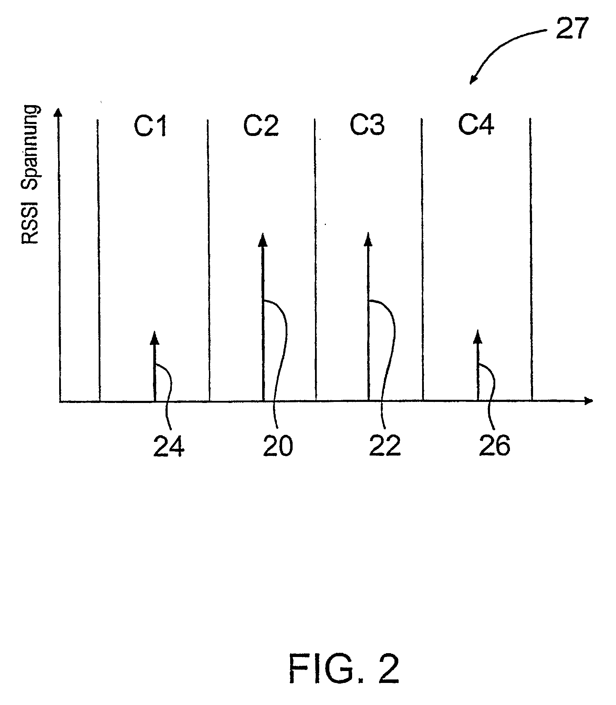

In Beantwortung der Übermittlung der Grundtöne 20 und 22 wird der Empfänger die Töne und zwei Intermodulationstöne dritter Ordnung 24 und 26 empfangen, wie in der Frequenz- oder Spektralantwort 27 für den Empfänger 10 gezeigt. Die Grundtöne 20 und 22, wie in Figur 2 gezeigt, sind in benachbarten Frequenzkanälen C2 und C3 untergebracht, während die durch Mischen der Grundtöne erzeugten Intermodulationstöne 24 und 26 eine reduzierte Amplitude haben und sich in einem niedrigeren Frequenzkanal C1 und einem höheren Frequenzkanal C4 befinden. Ein Eingangssignalstärkenanzeiger (RSSI) wird von den meisten FM-Empfangsgerät-Halbleitern erzeugt und kann eine Messung der in jedem der Kanäle C1 bis C4 empfangenen Energiemenge bereitstellen. Die von dem Empfänger 10 erzeugte RSSI-Ausgabe ist eine Spannung, die proportional zu der Im-Band-Energie des in jedem der gemessenen Kanäle C1 bis C4 empfangenen Signals ist. Die RSSI für jeden Kanal kann daher zur Bestimmung einer jeglichen Variation benutzt werden, die in den Modulationstönen dritter Ordnung 24 und 26 durch die Einführung einer Verstärkerstation 16 eingeführt wird, und zwar aufgrund der Nichtlinearität der Verstärker der Verstärkerstation 16. Um diese Variation zu entdecken, wird das Zugangssystem 2 gestartet, wobei zuerst eine normale Kommunikationsverbindung zwischen dem Schlüssel 4 und der Basisstation 8 innerhalb des vorbestimmten Bereichs hergestellt wird, wobei das RSSI für jeden Kanal C1 oder C4 gemessen wird, und wobei dies als eine spektrale Signatur für den Sender 6 des Schlüssels 4 aufgezeichnet wird. Alle zukünftigen Übermittlungen können dann auf ähnliche Weise gemessen werden um festzustellen, ob irgendeine Verstärkerstation in das System eingeführt wurde, um die Menge der empfangenen Intermodulationsenergie dritter Ordnung zu variieren. Die in den Tönen dritter Ordnung empfangene Differenz kann des weiteren verwendet werden, um einen charakteristischen Auffangpunkt dritter Ordnung zu bestimmen, um die angreifende Verstärkerstation 16 zu identifizieren. Entdeckung einer Verstärkerstation 16 durch die Basisstation 10 wird gewährleisten, daß die Basisstation 10 den Zugang zu dem gesicherten Ort versagt, auch wenn die Authentifizierungsdaten als gültig empfangen werden.

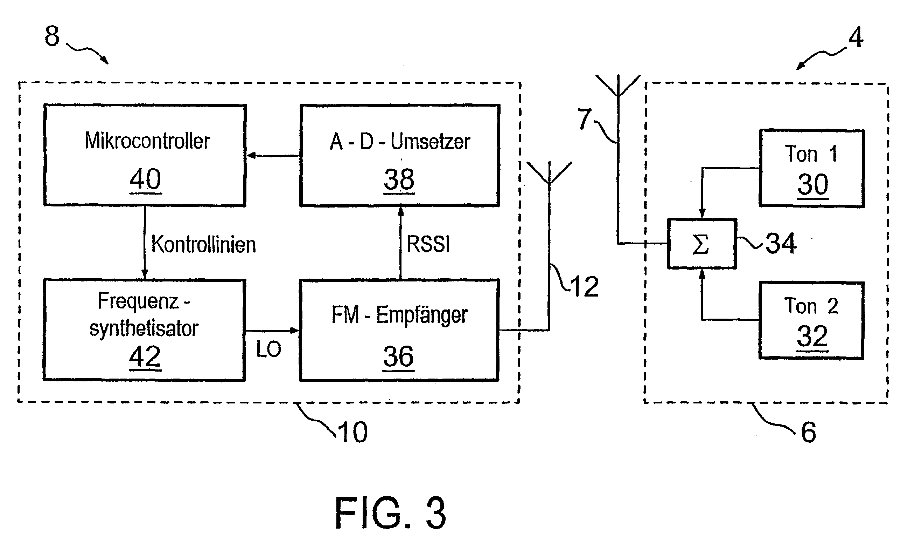

Der Sender 6, wie in Figur 3 gezeigt, beinhaltet eine Schaltlogik, die zwei konstante Tonsignale übermittelt, sobald der Schlüssel 4 von dem Empfänger 10 erregt wird. Die Schaltlogik kann zwei Radiofrequenz-Oszillatoren 30 bzw. 32 für die Töne einschließen, deren Ausgaben in einer Antennenweiche 34 zur Übertragung auf die Antenne 7 des Senders 6 vereinigt werden. Alternativ kann die Schaltlogik einen komplexen Quadraturmodulator einschließen, der die Erzeugung von zwei Tönen getrennt durch ein Mehrfaches des in dem Empfänger 10 verwendeten Kanalabstands ermöglicht.

Der Empfänger 10 schließt ein mit der Antenne 12 verbundenes FM Empfangsgerät 36, einen Analog-Digital-Umsetzer 38, einen Mikrocontroller 40 und einen frequenzsynthetisierten lokalen Oszillator 42 ein. Der Mikrocontroller 40 ist zur Steuerung des Frequenzsynthetisators 42 programmiert, sowie zur Verarbeitung von Daten, die von dem A-D-Umsetzer 38 empfangen werden. Der Frequenzsynthetisator wird zum Auswählen der Frequenzkanäle verwendet, die von dem FM-Empfänger 36 verarbeitet werden sollen, der, wie schon oben besprochen, eine RSSI-Ausgabe für jeden der vier Kanäle C1 bis C4 erzeugt. Die RSSI Ausgabe für jeden Kanal wird in den A-D-Umsetzer geleitet zur Umsetzung in ein Binärwort zur Verarbeitung durch den Mikrocontroller 40. Der Mikrocontroller 40 behandelt das Binärwort als spektrale Daten, die für die empfangene Energie in jedem der Kanäle C1 bis C4 repräsentativ ist, und verwendet dann die spektralen Daten zum Vergleich mit einer vorher gespeicherten spektralen Signatur für den Sender 6.

Das System 2 wird gestartet, indem der Schlüssel 4 innerhalb den vorbestimmten Bereich der Antenne 12 geführt wird, damit der Schlüssel 4 erregt wird und eine Übertragung der zwei Grundtöne verursacht. Die von dem Mikrocontroller 40 empfangenen spektralen Daten werden dann als spektrale Signatur des Senders 6 zwecks zukünftigem Vergleich für alle folgenden Kommunikationen zwischen dem Schlüssel 4 und dem Empfänger 10 gespeichert.

Der Schlüssel 4 und die Basisstation 8 führen dann dementsprechend die folgenden Schritte durch, wenn eine Kommunikationsverbindung in der Folge hergestellt wird:
(i) Vor der Übermittlung irgendwelcher Authentifizierungsdaten werden die zwei Grundtöne in den Kanälen C2 und C3 gleichzeitig übermittelt.
(ii) Der Frequenzsynthetisator 42 wählt die vier Kanäle C1 bis C4 und der FM-Empfänger 36 erzeugt eine RSSI-Ausgabe für jeden der Kanäle.
(iii) Der Mikrocontroller 40 empfängt und verarbeitet die spektralen Daten, die für die empfangenen Signalpegel für jeden der Kanäle repräsentativ sind, und dies wird mit der gespeicherten spektralen Signatur verglichen.
(iv) Falls eine Abweichung zwischen der spektralen Signatur und den spektralen Daten besteht, die mehr als ±1 % darstellt, veranlaßt der Mikrocontroller 40 die Basisstation 10 dazu, die Authentifizierungsverfahren abzubrechen und Zugang zu dem gesicherten Ort zu verhindern.
(v) Die Höhe der Abweichung der empfangenen spektralen Daten von der spektralen Signatur wird für nachfolgende Analyse aufgezeichnet, um einen charakteristischen Auffangpunkt dritter Ordnung zu ermitteln, damit die angreifende Verstärkerstation 16 identifiziert werden kann. Die Anzahl der Angriffe seitens der Verstärkerstation 16 kann auch gespeichert werden.
(vi) Wenn die Basisstation 10 in der Folge einen befugten Benutzer entdeckt und befugten Zugang erlaubt, verursacht der Mikrocontroller 40 die Erzeugung eines Warnsignals zur Anzeige, daß ein Angriff unternommen wurde. Das Warnsignal kann in Form einer Wortanzeige, einer Warnlampe oder eines Tonsignals sein, welches an dem gesicherten Ort, d.h. dem Fahrzeug, erzeugt wird.

## Patentansprüche

1. Ein Zugangssystem (2) einschließlich eines elektronischen Schlüssels (4) mit einem Sender (6) und eines gesicherten Ortes mit einem Empfänger (10), wobei der Sender (6) und der Empfänger (10) so ausgelegt sind, daß sie miteinander kommunizieren, um Authentifizierungsdaten auszutauschen, **dadurch gekennzeichnet, daß** der Sender (6) ein Signal übermittelt, der Empfänger (10) das übermittelte Signal in spektrale Daten umsetzt, und das Zugangssystem (2) bei Übertragung der Authentifizierungsdaten Zugang zu dem gesicherten Ort gewährt, wenn die spektralen Daten mit der spektralen Signatur des Senders (6) übereinstimmen.

2. Ein Zugangssystem (2) gemäß Anspruch 1, **dadurch gekennzeichnet, daß** das System durch den Sender (6) gestartet wird, der das Signal an den Empfänger (10) übermittelt, und der Empfänger (10) das übermittelte Signal in die spektralen Daten umsetzt und die spektralen Daten als die spektrale Signatur speichert.

3. Ein Zugangssystem (2) gemäß Anspruch 1 oder 2, **dadurch gekennzeichnet, daß** das Signal ein Streuspektrum umfaßt.

4. Ein Zugangssystem (2) gemäß Anspruch 1 oder 2, **dadurch gekennzeichnet, daß** das Signal mindestens zwei Töne umfaßt, und die spektralen Daten Töne dritter Ordnung des übermittelten Signals darstellen.

5. Ein Zugangssystem (2) gemäß Anspruch 4, **dadurch gekennzeichnet, daß** die Töne konstanter Amplitude sind.

6. Ein Zugangssystem (2) gemäß Anspruch 5, **dadurch gekennzeichnet, daß** die spektralen Daten aufgrund der empfangenen Signalstärke des übermittelten Signals in mindestens zwei Frequenzbändern erzeugt werden.

7. Ein Zugangssystem (2) gemäß Anspruch 6, **dadurch gekennzeichnet, daß** die zwei Frequenzbänder jeweils den Frequenzen der Töne dritter Ordnung entsprechen.

8. Ein Zugangssystem (2) gemäß Anspruch 7, **dadurch gekennzeichnet, daß** der Empfänger (10) eine Differenz zwischen den spektralen Daten und der spektralen Signatur zur Verwendung bei der Identifizierung eines unbefugten Systems ermittelt.

9. Ein Zugangssystem (2) gemäß Anspruch 7, **dadurch gekennzeichnet, daß** die Authentifizierungsdaten nach Übermittlung der konstanten Amplitudetöne übermittelt werden.

10. Ein Zugangssystem (2) gemäß Anspruch 7, **dadurch gekennzeichnet, daß** der Empfänger (10) folgende einschließt:
Elemente (36,42) zur Demodulation des übermittelten Signals für ausgewählte Frequenzbänder und Erzeugen von Signalen der empfangenen Signalstärke für die Bänder; und
Elemente (38,40) zum Umsetzen der Signale der empfangenen Signalstärke in spektrale Daten und Vergleich der spektralen Daten mit der spektralen Signatur.

11. Ein Zugangssystem (2) gemäß Anspruch 10, **dadurch gekennzeichnet, daß** die Demodulationselemente (36,42) einen Frequenzsynthetisator (42) zum Wählen der Bänder einschließt, und die Umsetzerelemente (38,40) einen Mikrocontroller (40) zur Steuerung des Frequenzsynthetisators (42) einschließt.

12. Ein Zugangssystem (2) gemäß einem beliebigen der vorangehenden Ansprüche, **dadurch gekennzeichnet, daß** der gesicherte Ort innerhalb eines Fahrzeugs ist

13. Ein Fahrzeug einschließlich eines Zugangssystems (2) gemäß einem beliebigen der vorangehenden Ansprüche.

14. Eine Methode zur Gewährung des Zugangs an einen gesicherten Ort, einschließlich:
Empfang eines gesandten Signals;
Umsetzen des gesandten Signals in spektrale Daten;
Vergleich der spektralen Daten mit einer spektralen Signatur eines Senders; und
Gewährung des Zugangs an den gesicherten Ort bei Empfang von Authentifizierungsdaten, wenn die spektralen Daten mit der spektralen Signatur übereinstimmen.

15. Eine Methode gemäß Anspruch 14, einschließlich Übermittlung von mindestens zwei Tönen, und **gekennzeichnet dadurch, daß** die spektralen Daten Töne dritter Ordnung des übermittelten Signals repräsentieren.

## Claims

1. An access system (2) including an electronic key (4) with a transmitter (6), and including a secured location with a receiver (10), with the transmitter (6) and the receiver (10) being designed such that they communicate with one another in order to interchange authentication data, **characterized in that** the transmitter (6) transmits a signal, the receiver (10) converts the transmitted signal to spectral data, and the access system (2) allows access to the secured location when the authentication data is transmitted, provided the spectral data matches the spectral signature of the transmitter (6).

2. An access system (2) according to Claim 1, **characterized in that** the system is started by the transmitter (6), which transmits the signal to the receiver (10), and the receiver (10) converts the transmitted signal to the spectral data, and stores the spectral data as the spectral signature.

3. An access system (2) according to Claim 1 or 2, **characterized in that** the signal covers a scattered spectrum.

4. An access system (2) according to Claim 1 or 2, **characterized in that** the signal comprises at least two tones, and the spectral data represents third-order tones of the transmitted signal.

5. An access system (2) according to Claim 4, **characterized in that** the tones have a constant amplitude.

6. An access system (2) according to Claim 5, **characterized in that** the spectral data is produced on the basis of the received signal strength of the transmitted signal in at least two frequency bands.

7. An access system (2) according to Claim 6, **characterized in that** the two frequency bands each correspond to the frequencies of the third-order tones.

8. An access system (2) according to Claim 7, **characterized in that** the receiver (10) determines any difference between the spectral data and the spectral signature for use in the identification of an unauthorized system.

9. An access system (2) according to Claim 7, **characterized in that** the authentication data is transmitted after transmission of the constant amplitude tones.

10. An access system (2) according to Claim 7, **characterized in that** the receiver (10) includes the following:
elements (36, 42) for demodulation of the transmitted signal for selected frequency bands and for producing signals of the received signal strength for the bands; and
elements (38, 40) for converting the signals of the received signal strength to spectral data, and for comparing the spectral data with the spectral signature.

11. An access system (2) according to Claim 10, **characterized in that** the demodulation elements (36, 42) include a frequency synthesizer (42) for selection of the bands, and the converter elements (38, 40) include a microcontroller (40) for controlling the frequency synthesizer (42).

12. An access system (2) according to any of the preceding claims, **characterized in that** the secured location is within a vehicle.

13. A vehicle including an access system (2) according to any of the preceding claims.

14. A method for allowing access to a secured location, including:
reception of a transmitted signal;
conversion of the transmitted signal to spectral data;
comparison of the spectral data with a spectral signature of a transmitter;
and
allowing access to the secured location on reception of authentication data, provided the spectral data matches the spectral signature.

15. A method according to Claim 14, including transmission of at least two tones, and **characterized in that** the spectral data represents third-order tones of the transmitted signal.

## Revendications

1. Système d'accès (2) comprenant une clé électronique (4) avec un émetteur (6) et un endroit protégé équipé d'un récepteur (10), l'émetteur (6) et le récepteur (10) étant conçus pour communiquer l'un avec l'autre pour échanger des données d'authentification,
**caractérisé en ce que**
l'émetteur (6) transmet un signal que le récepteur (10) convertit en données spectrales et le système d'accès (2) assure l'accès à l'endroit protégé lors de la transmission de données d'authentification si les données spectrales correspondent à la signature spectrale de l'émetteur (6).

2. Système d'accès (2) selon la revendication 1,
**caractérisé en ce que**
le système est lancé par l'émetteur (6) qui transmet le signal au récepteur (10) et le récepteur (10) convertit le signal transmis en données spectrales et enregistre ces données spectrales comme signature spectrale.

3. Système d'accès (2) selon la revendication 1 ou 2,
**caractérisé en ce que**
le signal comprend un spectre de dispersion.

4. Système d'accès (2) selon la revendication 1 ou 2,
**caractérisé en ce que**
le signal comprend au moins deux sons et les données spectrales représentent des sons du troisième ordre du signal transmis.

5. Système d'accès (2) selon la revendication 4,
**caractérisé en ce que**
les sons ont une amplitude constante.

6. Système d'accès (2) selon la revendication 5,
**caractérisé en ce que**
les données spectrales sont générées dans au moins deux bandes de fréquences du fait de l'amplitude du signal transmis et reçu.

7. Système d'accès (2) selon la revendication 6,
**caractérisé en ce que**
les deux bandes de fréquences correspondent chaque fois à des fréquences de son du troisième ordre.

8. Système d'accès (2) selon la revendication 7,
**caractérisé en ce que**
le récepteur (10) détermine une différence entre les données spectrales et la signature spectrale pour l'utiliser pour l'identification d'un système non autorisé.

9. Système d'accès (2) selon la revendication 7,
**caractérisé en ce que**
les données d'authentification sont transmises après la transmission des sons d'amplitude constante.

10. Système d'accès (2) selon la revendication 7,
**caractérisé en ce que**
le récepteur (10) comprend les éléments suivants :
- des éléments (36, 42) pour démoduler le signal transmis pour les bandes de fréquences sélectionnées et pour générer des signaux d'intensité de signal reçu pour les bandes et
- des éléments (38, 40) pour convertir les signaux d'intensité reçus en données spectrales et comparer les données spectrales à la signature spectrale.

11. Système d'accès (2) selon la revendication 10,
**caractérisé en ce que**
les éléments de démodulation (36, 42) comprennent un synthétiseur de fréquences (42) pour sélectionner les bandes et les éléments de conversion (38,40) comportent un microcontrôleur (40) pour commander le synthétiseur de fréquences (42).

12. Système d'accès (2) selon l'une quelconque des revendications précédentes,
**caractérisé en ce que**
l'emplacement protégé se situe dans un véhicule.

13. Véhicule équipé d'un système d'accès (2) selon l'une quelconque des revendications précédentes.

14. Procédé pour autoriser l'accès à un endroit protégé comprenant
- la réception d'un signal émis,
- la conversion du signal émis en données spectrales,
- la comparaison des données spectrales à la signature spectrale de l'émetteur, et
- l'autorisation d'accès à l'endroit protégé à la réception des données d'authentification si les données spectrales coïncident avec la signature spectrale.

15. Procédé pour autoriser l'accès à un endroit protégé selon la revendication 14 avec transmission d'au moins deux sons,
**caractérisé en ce que**
les données spectrales représentent des sons du troisième ordre du signal transmis.
